# EUROPEAN PATENT APPLICATION

(11) **EP 2 129 172 A1**
(43) Date of publication of application: **02.12.2009**
(21) Application number: 08305220.9
(22) Date of filing: 30.05.2008
(51) Int. Cl.: H04W 8/18, H04W 8/20

(54) **A method, a token and a system for processing a service**

(71) Applicant: GEMPLUS, 13420 Gémenos (FR)
(72) Inventor: Tuilier, Edmond, 13012 MARSEILLE (FR); Ducreux, Eric, 13012 MARSEILLLE (FR)

(57) **Abstract**

The invention relates to a method for processing a service, as a first service, a token being able to send a service request and/or a response to a service request.

According to the invention, the method comprises a comparison step in which the token compares the first service with at least one predetermined second service, if the first service corresponds to one predetermined second service among the at least one predetermined second service, then the token executes at least one action or non-action associated with the corresponding predetermined second service.

The invention relates also to a corresponding token and a corresponding system.

## Description

### Field of the invention:

The invention relates to, in a general manner, a method for processing a service.

Moreover, the invention also pertains to a token for processing a service.

Lastly, the invention relates to a system for processing a service.

### State of the art:

Within the present description, the word "service" is to be understood, as a capability offered by an electronic device, as a terminal, that has to cooperate with a token (as a portable electronic object) in order to be processed by the terminal.

It is known to request a service from a smart card to a mobile phone hosting the smart card. For example, a SIM (acronym for "Subscriber Identity Module") card accommodated within the mobile phone sends it a service request.

However, such a known solution has a drawback.

As a matter of fact, the known solution assumes that the mobile phone supports the service request in order to be processed. When the service request is actually or not supported by the mobile phone, then the service is not rendered while possibly causing a non-correct mobile phone execution or a mobile phone disturbance or a mobile phone switch off.

### Summary of the invention:

The invention proposes a solution so as to mitigate the drawback stated just hereinabove by providing a method for processing a service, as a first service. A token is able to send a service request and/or a response to a service request.

According to the invention, the method comprises a comparison step in which the token compares the first service with at least one predetermined second service, and if the first service corresponds to one predetermined second service among the at least one predetermined second service, then the token executes at least one action or non-action associated with the corresponding predetermined second service.

The principle of the present invention is to firstly determine whether or not the service matches with one of a service list that has been previously defined, and, if the service is identified as a list member then the token takes over a processing of another service or a modified service or nothing at all.

In other words, the token analyses whether or not the service is to be requested, as such or not or not as such, before possibly undertaking any further processing. It is to be noted that the token can undertake no particular action instead of a requested service.

Thus, when the service does not match with any list member, the token sends a corresponding service request or service request response, i.e. without any modification of the intended service request or service request response.

Accordingly, the token undertakes a filtering of the service to be requested before addressing to outside.

The authorization for transferring a request relating to the service is therefore under the control of the sole token.

Thus, the present invention proposes an alternative solution to the known solution stated hereinabove that allows to issue a service request or a service request response in a controlled manner.

Contrary to the known solution, the present invention involves a token processing before undertaking a transmission of a service request (or a service request response) from the token. A terminal connected to the token is not automatically addressed with a service request (or a service request response) not actually supported reducing thus the risk of an occurrence of a terminal disturbance or a terminal switch-off or a non-correct terminal execution.

According to another aspect, the invention is a token comprising means for sending a service request and/or a response to a service request to at least one external entity.

According to the invention, the token is adapted to compare the first service with at least one predetermined second service and, according to a comparison result, the token executes at least one action or non-action associated with the corresponding predetermined second service.

According to still another aspect, the invention is a system comprising a token and a terminal connected to the token. The token comprises means for sending a service request and/or a response to a service request to at least the terminal.

According to the invention, at least one of the token and the terminal is adapted to compare the first service with at least one predetermined second service and, according to a comparison result, the at least one of the token and the terminal executes at least one action or non-action associated with the corresponding predetermined second service.

### Brief description of the drawings:

Additional features and advantages of the invention will be more clearly understandable after reading a detailed description of one single preferred embodiment, given as an indicative and not limitative example, in conjunction with the following drawings:
- Figure 1 illustrates a simplified diagram of an embodiment of a system comprising a SIM card and a mobile equipment accommodating the SIM card, according to the invention;
- Figure 2 is an embodiment of the SIM card of figure 1;
- Figure 3 illustrates a simplified diagram of a table stored within the SIM card of figure 2; and
- Figure 4 presents an organization chart representing an embodiment of a method for processing a service implemented by the SIM card of figure 2.

### Detailed description of one embodiment:

Herein under is considered a system including a mobile phone, as terminal, and a smart card, as token, by which the invention method for processing a command, as a service, is implemented.

However, it is only for exemplifying purposes and, as such, it is not to be considered to reduce the scope of the present invention.

It is to be noted that, as token, it can be a mass storage key, such as a USB (acronym for "Universal Service Bus") key and/ or a dongle (that does not need any reader to be read). Likewise, as terminal, it can be a mobile laptop, a personal digital assistant (or PDA), and/or a personal computer (or PC).

It is to be noted that the solution is described for a command. But it is also applicable to a function, a response to a command, an event and/or a process, as a service.

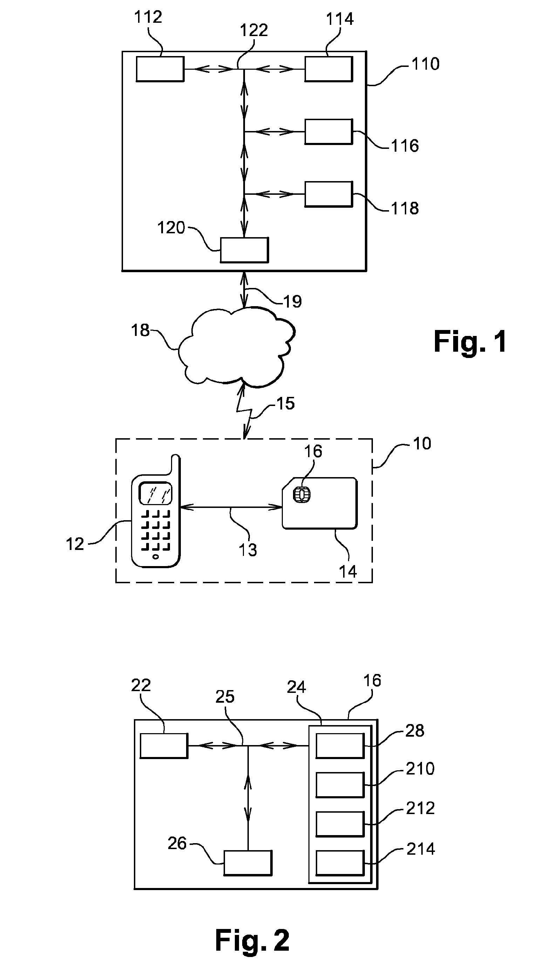

Figure 1 shows a mobile station 10, as a system, that is connected through a radio telecommunication network 18 to a configuration server 110.

The mobile station 10 is connected through a bi-directional radiofrequency link 15 to a GSM (acronym for "Global Service Mobile"), a GPRS (acronym for "General Packet Radio Service"), a UMTS (acronym for "Universal Mobile Telecommunication System") and/or any other communication network, such as WLAN (acronym for "Wireless Loacal Area Network").

The radio telecommunication network 18 is preferably connected through a cable link 19 to the configuration server 110.

The mobile station 10 includes a mobile phone 12, as a mobile equipment or terminal, and a smart card 14 of the SIM card type, as a token.

As known per se, the mobile phone 12 typically comprises, among others, data storing means. The data storing means stores data and in particular an IMEI (acronym for "International Mobile Equipment Identity"), as an unique number for identifying the associated mobile equipment.

The mobile phone 12 is only able to communicate with the radio telecommunication network when the mobile phone 12 cooperates with the smart card, also termed SIM card 14 hereinafter.

The mobile phone 12 accommodates the smart card 14 with which the mobile phone 12 is able to communicate through a bi-directional contact link 13.

The smart card 14 is preferably a removable token that can be accommodated with another mobile phone or a PDA, as a mobile equipment.

According to another embodiment, the terminal is connected with the token through a bi-directional short range radiofrequency link (known as a contactless link), such as a Bluetooth, Wifi, Wi-max or the like.

The smart card 14 retrieves, at its initiative, the IMEI stored within the mobile phone 12 with which the smart card 14 is coupled.

The smart card 14 sends a notification message including the concerned IMEI through the mobile phone 12 to the configuration server 110.

The configuration server 110 is able to analyse the IMEI or the like, as an identifier of the mobile equipment, so as to determine its model, type and capabilities.

The mobile equipment identifier is used for assessing the capabilities of the considered communication terminal, such as the available services, like commands and responses to the commands to be exchanged with the SIM card 14, Multimedia Message Service (or MMS), electronic mail "e-mail", Wireless Application Protocol (or WAP) browser, and/or, according the terminal location, services allowed to be offered and so on...

The configuration server 110 includes several components comprising data processing means 112, like a microprocessor, data storing means 114, 116 and 118, an Input/Output (or I/O) interface 120 and a control and data bus 122 connecting all components together.

The data processing means 112 is the heart of the configuration server 112.
The data processing means 112 controls and processes data to be exchanged within the configuration server 110 and also data to be exchanged with outside through the I/O interface 120.

In particular, once the data processing means 112 has received from outside a message including the IMEI, to identify a terminal that has sent the message, it is able to compare the IMEI with a list of terminal identifiers stored within the data storing means 114.

The configuration server 110 can send to the SIM card 14 that the mobile phone 12 is referenced or, on the contrary, not referenced.

When the received IMEI matches a terminal identifier, then the data processing means 112 addresses to data storing means 116 storing models, types, capacities or services and substitution actions for some referenced communication terminals with which the configuration server 110 may be in relationship.

According to a preferred feature of the invention, the configuration server 110 stores at least one substitution non-action or action, including commands, responses to commands, and/or to be exchanged between the token and the terminal, associated with at least some services (or capacities) for several terminals. When a non-action is associated then the mobile phone 12 will not execute anything at all. Thus, at least one substitution action that has proven to be effectively supported by the concerned terminal can be used instead of a desired initial command, function, response to a command, and/or process.

Once the data processing means 112 has retrieved the capacities of the communication terminal identified by means of the received IMEI, the data processing means 112 transmits, as a response message with the associated capacities or services accompanied with some corresponding substitution action(s) to the received message, through the I/O interface 120, to the mobile station 10.

Moreover, the data processing means 112 can address to data storing means 118 storing services to which the corresponding subscriber has subscribed and to she or he is entitled.

According to another embodiment (not represented), at least one of the three data storing means 114, 116 and 118 is located within another entity possibly connected to the configuration server 110, instead of being all embedded within one and the same entity, namely the configuration server 110. According to such other embodiment, the data storing means 116 is preferably reachable in a direct or an indirect manner from at least the SIM card 14. For example, the SIM card 14 is connected, through a short range radiofrequency link, like a Bluetooth, Wifi, Wimax link, to a PC either including a configuration server embedding data storing means storing capacities and for at least one service, at least one associated substitution action, or being connected through a communication network, like Internet, to such a configuration server.

Once received the mobile station 10 has received the response message, the mobile station 10 stores at least one service that is associated with at least one substitution action, in order to be configured accordingly.

According to still another embodiment (not represented), the SIM card 14 has been previously configured without needing to receive a message originating from a configuration server notifying that at least one service is associated with at least one substitution action to be carried out. For example, preferably during its manufacturing process, the SIM card 14 is loaded with a file containing at least one service associated with at least one substitution action, that the SIM card 14 stores.

According to a preferred embodiment, the SIM card 14 stores within its chip 16 (as described hereinafter) a file containing at least one service associated with at least one substitution action or non-action, as configuration parameters.

Alternatively, the SIM card 14 can store within its chip 16 data or object or a table relating to at least one service to be substituted by at least one substitution action or one substitution non-action, as configuration parameters.

One response message originating from the configuration server 110 can be sufficient for all the services for which associated substitution actions are provided.

Several response messages originating from the configuration server 110 can be required. In such a case, each response message can be a reply to a message originating from the SIM card 14 and transmitting data relating to a service intended to be used with the SIM card 14.

According to a variant, the mobile phone 12 stores a file containing at least one service associated with at least one substitution action, as configuration parameters.

According to the invention, the SIM card 14 is adapted to compare a service to be executed in cooperation with the mobile phone 12 with the service(s) contained within the stored file, and, when the service is included within the file, then the SIM card 14 executes the substitution action(s), when any, that is(are) associated with the service to be requested.

According to a variant, the mobile phone 12 is adapted to compare a service to be executed in cooperation with the SIM card 14 with the service(s) contained within the stored file, and, when the service is included within the file, then the mobile phone 12 executes the substitution action(s) associated with the service.

Preferentially, the substitution action(s) is(are) defined in such a manner that the SIM card 14 transmits data to the mobile phone 12 known to the mobile phone 12 that is therefore compliant.

Consequently, data relating to any service and to be exchanged between the mobile phone 12 and the SIM card 14 is effectively interpreted by the mobile phone 12, thus able to work without causing any damage like a processing abortion of the intended service.

Accordingly, even if the mobile phone 12 has declared, through a terminal profile, to the SIM card 14 that the mobile phone 12 supports a service that is not actually supported, only data known to the mobile phone 12, for example as a command or a command response, is received from the SIM card 14. No misinterpretation by the mobile phone 12 is thus rendered possible.

Figure 2 depicts components incorporated within the SIM card 14.

The chip 16 carried by the SIM card 14 comprises data and processing means 22, such as a microprocessor, data storing means 24, and an Input/Output interface 26 connected together with a data and control bus 25.

The chip 16 is able to cooperate with a mobile communication equipment, such as the mobile phone 12.

The data and processing means 22, as heart of the chip 16, processes and controls data to be exchanged within the chip 16 and also data to be exchanged with outside the chip 16.

The data storing means 24 preferentially includes volatile and non volatile memories. The non volatile memory can be an EEPROM (acronym for Electrically Erasable Programmable Read-Only Memory).

The data storing means 24 stores an operating system 28.

The data storing means 24 stores a unique number associated with a subscriber, as the user of the radio telecommunication network 18, such as an International Mobile Subscriber Identity (or IMSI), to be sent to the network 18, in order to allow a communication service within the network 18.

The data storing means 24 stores at least one application 212, such as a SIM application Tool Kit type, also known as STK that enables the SIM to initiate actions which can be used for various value added services.

As known per se, the STK consists of a set of commands which define how the SIM card 14 directly interacts with the outside world and initiates commands independently of the mobile phone 12 and the radio telecommunication network 18. When the SIM card 14 initiates commands, the SIM card 14 is qualified as being proactive. Among others, the chip 16 requests from the mobile phone 12 a sending of a notification message including the IMEI, as mobile equipment identifier, to the network 18.

Moreover, the data storing means 24 stores a file relating to a table 214 encompassing at least one service associated with one substitution action. The file can be constituted by a First In First Out (or FIFO) register. The file can be updated either line by line for each new command or response to a command to be substituted with some corresponding associated substituting command or response to a command or any other action while involving a transmission of data to the mobile phone, or as a whole. Such an update can be performed Over The Air (or OTA) from the configuration server 110 having an up to date database for the concerned mobile phone.

According to a preferred embodiment, the operating system 28 is adapted such that, when executed by the microprocessor 22, compares a service to be executed in collaboration with the mobile phone 12, by means of a corresponding command that is to be sent to the mobile phone, with at least one command comprised within the table 214 stored within the data storing means 24.

According to a variant (not represented), instead of the operating system 28, a dedicated application stored within the data storing means 24 is to be executed before transmitting any command data to the mobile phone 12. Such a dedicated application is an intermediary application between a requesting application and a sending of any command to the mobile phone 12.

Then, when the considered command is identified as a particular list member, then the microprocessor 22 executes the action(s) that is associated with the command and to be executed instead of the considered command.

On the contrary, when the considered command is not comprised within the list, then the microprocessor 22 sends to the mobile phone 12 the considered command without any modification.

The command to be executed can originate from outside the chip 16. For example, the user selects a service, through a man machine interface (like a display) provided within the mobile phone 12, that has launched an application executed within the mobile phone 12 while involving the SIM card 14 by sending from the SIM card 14 a command to be executed by the mobile phone 12.

The command to be executed can originate from the chip 16 itself. For example, a SIM card application, like the STK application, generates a command to be sent from the SIM card 14 and executed by the mobile phone 12.

The invention allows to obtain a better compatibility of the mobile phone 12 cooperating with the chip 16 without any misinterpretation of a non-supported or not actually supported command.

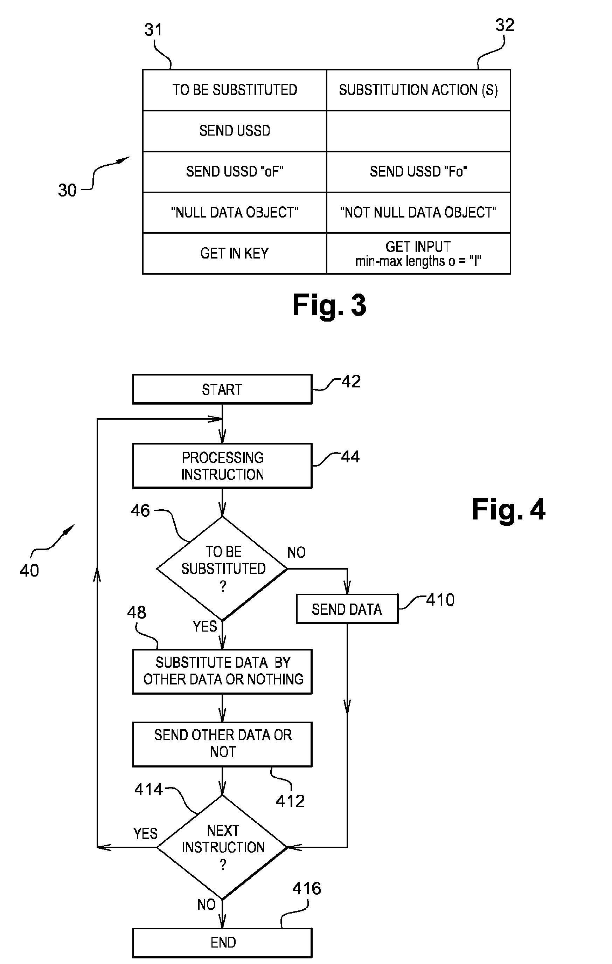

Figure 3 depicts an example of a table 30 including a command or response to a command to be substituted by some potential associated substitution action(s) executed by the SIM card 14.

The table comprises, as the head of a first column 31, the command to be substituted, and, as the head of a second column 32, the corresponding potential action(s) substituting to the command to be substituted.

The command to be substituted can be with or without any parameter.

The command to be substituted has proven to be badly supported or even not supported at all by the mobile phone 12 currently cooperating with the SIM card 14.

The command to be substituted has been generated by an application launched by the user (for example through a selection of an application from the STK menu) or by the mobile phone 12 or by the SIM card 14 itself or externally while involving the SIM card 14.

The corresponding potential action(s) to be executed by the SIM card 14 can be a result of some previous test that has proven that the undertaken action does not generate any working damage on the mobile phone side.

The corresponding action(s) can prevent the chip 16 from sending to the mobile phone 12 any predetermined associated command for executing the first service.

For example, a command "SEND USSD" originating from an internal application, like STK, which should be used to send, through the mobile phone 12, an "Unstructured Supplementary Service Data" string to a dedicated external server, is listed, and not to be replaced by any corresponding service, like a response. The internal application can be informed that such a command is not interpretable by the mobile phone 12 while specifying an execution error, such as a "3X" status. Thus, the microprocessor 22 does not send, through the I/O interface 26 to the mobile phone 12, instead of the command "SEND USSD", any service constituted a substitution action, for example, by a response message or any other command or any other command response. The mobile phone 12 does not receive any service request and does not execute any action. Due to the fact that no substitution action is performed by the mobile phone 12, the mobile phone 12 is therefore inactive, and is unaware of any corresponding service request originating from the SIM card 14. Thus, no corresponding service is assumed by the mobile phone 12.

The corresponding action(s) can authorize the chip 16 to send to the mobile phone 12, one and the same command for executing a service while modifying a value of at least one parameter.

For example, a command "SEND USSD" with a Data Coding Scheme (or DCS) value "0F", as parameter data, is listed, and to be changed by the same command "SEND USSD" with another DCS value "F0" as parameter data. It is transparent to the original application, such as an application termed "call back", requesting to send the command with parameter data to the mobile phone 12. In other words, the application that has requested the command with other parameter data does not notice any particular change.

Likewise, the corresponding action(s) can authorize the chip 16 to send to the mobile phone 12, one and the same response (not represented) to a command for executing a service while modifying a value of at least one parameter.

For example, a response to a command "ENVELOPPE (CALL CONTROL)" with an alpha identifier value "null data object" is listed, and to be changed by the same response with another alpha identifier value "not null data object" with spaces as parameter data. It is transparent to the original application external to the chip 16 receiving the response with some parameter data that has not to be interpreted by the mobile phone 12. In other words, the application of the mobile phone 12 relating to a displaying of information item(s) generates an empty display (i.e. with no value), the user does not therefore see any information item.

The corresponding action(s) can authorize the chip 16 to send to the mobile phone 12, another associated command for executing a service while modifying a value of at least one parameter.

For example, a command "GET INKEY", by which the chip 16 requests user to enter only one single digit or character is substituted by another corresponding command "GET INPUT", by which the chip 16 requests user to enter a string of digits or characters while setting the minimum and maximum length values to the value "1". According to such an example, when the corresponding command "GET INPUT" with the minimum and maximum length values set to the value "1" has been executed by the mobile phone 12, the SIM card 14 is also informed (not represented) that data relating to an associated terminal response should be sent from the mobile phone 12 to the SIM card 14. In other words, when the mobile phone 12 has executed the command "GET INPUT" with the minimum and maximum length values set to the value "1" requested by the SIM card 14 and received by the mobile phone 12, then the terminal response associated with this command should be received by the SIM card 14. Thus, after having received the terminal response corresponding with the command "GET INPUT" with the minimum and maximum length values set to the value "1", the SIM card 14 interprets such a terminal response as an expected normal terminal response associated with the command "GET INKEY" without causing any particular disturbance of the SIM card 14.

According to a preferred embodiment, the SIM card 14 is able to modify the corresponding terminal response originating from the mobile phone 12, as terminal response, in order to be fully transparent with respect to an internal application, such as the STK application, from which is issued the command to be substituted. For the previous example, the SIM card 14 is adapted to change a terminal response relating to the command "GET INPUT" with the minimum and maximum length values set to the value "1" to a terminal response relating to the command "GET INKEY".

It is transparent to the original application, either internal or external to the chip 16, and the mobile phone 12 is able to interpret the substituting command with the adapted minimum and maximum length values.

Other example can be given without departing from the invention spirit. For example, a command relating to a request of service using a channel unavailable or unknown to the mobile phone and to be sent from the SIM card 14 to the mobile phone 12 is changed by a corresponding command requesting the mobile phone 12 to use another channel. For example, data are to be sent from the mobile phone 12 through a channel that is not supported by the mobile phone 12, such as a short range radiofrequency link, like WIMAX, while supporting another short range radiofrequency link like WIFI, then the command "SEND" and data (to be sent as parameter) are kept while the channel to be used is modified by replacing it by the channel relating to WIFI.

Figure 4 shows an organization chart representing an embodiment of a method 40 for processing a service requested from the SIM card 14 to the mobile phone 12.

Firstly, the SIM card launches 42 an application.

According to a variant, the mobile phone launches an application involving a SIM card processing.

The SIM card processes 44 at least one instruction comprised within a program relating to the processing of the application by the chip 16.

Then, the SIM card analyses 46 whether a current instruction matches with a command, a response to a command, or at least one piece of data, as a service request to be substituted and sent to the mobile phone, in order that the mobile phone interprets it and be able to execute it.

When the considered service request does not correspond with any service request to be substituted and sent to the mobile phone, then the SIM card sends 410 data relating to the considered service request as such, i.e. without any modification, to the mobile phone. After having sent data, the SIM card passes to a next step 414 in which the SIM card analyses whether there exists or not another instruction to be processed.

On the contrary, when the service request does correspond with an identified service request to be substituted among the table, then, instead of the considered service request, the SIM card can replace 48 at least one piece of data, as the associated substitution action(s) with the identified service request that is specified within the table.

It is to be noted that the SIM card can replace the identified service request by nothing, i.e. no action at all.

The piece(s) of data or no data, as substitution data, that is(are) to be sent (when any) to the mobile phone is(are) distinct from the one relating to the service request that should have been sent to the mobile phone. The potential substitution data is therefore adapted to the capacities or functionalities of the cooperating mobile phone.

Optionally, the corresponding substitution actions include a command for displaying an information item at the mobile phone display about one of the action to be carried out by the mobile phone.

Optionally, the corresponding substitution actions include a command for displaying an information item at the mobile phone display about a success or a non-success relating to an execution of the action to be carried out by the mobile phone.

Then, the SIM card 14 does not send any data or sends 412 to the mobile phone 12 at least one piece of data replaced by substitution data or no data relating to a substitution action(s) or a substitution non-action.

The mobile phone receives either original data or no data or substitution data that is known to the mobile phone, and becomes therefore able to interpret it for its execution.

After having sent data, the SIM card verifies 414 whether there is a next instruction to be executed by the SIM card.

When all the instructions have been processed by the chip of the SIM card, then the application is terminated 416.

When another instruction is to be processed, then the chip of the SIM card passes to a processing 44 of the next instruction.

## Claims

1. A method (40) for processing a service, as a first service, a token (14) being able to send a service request and/or a response to a service request,
**characterized in that** the method comprises:
- a comparison step (46) in which the token compares the first service with at least one predetermined second service,
- if the first service corresponds to one predetermined second service among the at least one predetermined second service, then the token executes (48) at least one action or non-action associated with the corresponding predetermined second service.

2. Method according to claim 1, wherein, a terminal being connected to the token, if the first service does not correspond to any predetermined second service among the at least one predetermined second service, then the token sends (410) to the terminal a predetermined associated command for executing the first service.

3. Method according to claim 2, wherein, at least one of the token and the terminal being connected to an external server (110), the method comprises at least some of the following steps:
- the token sends to the server data relating to a terminal identifier,
- the server sends to the token a message for informing that the terminal identifier is referenced or not referenced,
- the token sends to the server data relating to the first service.

4. Method according to claim 1 or 2, wherein the token is loaded with a file (30) including the at least one predetermined second service and at least one action or non-action associated with the corresponding predetermined second service.

5. Method according to any of claims 1 to 4, wherein the token stores the at least one predetermined second service and the at least one action or non-action associated with the corresponding predetermined second service.

6. Method according to any of claims 1 to 5, wherein, a terminal being connected to the token, the at least one associated action or non-action comprises:
- to prevent the token from sending to the terminal a predetermined associated command for executing the first service;
- to authorize the token to send the first service, through a predetermined associated command for executing the first service while modifying a value of at least one parameter, to the terminal;
- to authorize the token to send the first service, through a modified predetermined associated command for executing the first service while keeping a value of at least one parameter, to the terminal; and/or
- to authorize the token to send the first service, through a modified predetermined associated command for executing the first service while modifying a value of at least one parameter, to the terminal.

7. A token (14) for processing a service, as a first service, the token comprising means for sending a service request and/or a response to a service request to at least one external entity,
**characterized in that** the token is adapted to compare the first service with at least one predetermined second service and, according to a comparison result, the token executes at least one action or non-action associated with the corresponding predetermined second service.

8. Token according to claim 7, wherein the token comprises at least one member of a group comprising:
- a smart card;
- a mass storage key, such as a USB key;
- a dongle.

9. A system (10) for processing a service, as a first service, the system comprising a token (14) and a terminal (12) connected to the token, the token comprising means for sending a service request and/or a response to a service request to at least the terminal,
**characterized in that** at least one of the token and the terminal is adapted to compare the first service with at least one predetermined second service and, according to a comparison result, the at least one of the token and the terminal executes at least one action or non- action associated with the corresponding predetermined second service.

10. System according to claim 9, wherein the terminal comprises at least one member of a group comprising:
- a mobile phone;
- a mobile laptop;
- a personal computer;
- a personal digital assistant.
